# EUROPEAN PATENT SPECIFICATION

(11) **EP 1 845 631 B1**
(45) Date of publication and mention of the grant of the patent: **10.11.2010**
(21) Application number: 05709483.1
(22) Date of filing: 31.01.2005
(51) Int. Cl.: G06K 17/00, H04B 5/02

(54) **RFID COMMUNICATION CONTROL METHOD AND RFID SYSTEM USING THE SAME**
RFID-KOMMUNIKATIONS-STEUERVERFAHREN UND DIESES EINSETZENDE RFID-SYSTEM
METHODE DE COMMANDE DE COMMUNICATION RFID ET SYSTEME RFID UTILISANT CELLE-CI

(43) Date of publication of application: 17.10.2007
(73) Proprietor: Fujitsu Ltd., Kawasaki-shi, Kanagawa 211-8588 (JP)
(72) Inventor: TANAKA, Yoshinori, c/o FUJITSU LIMITED,, Kawasaki-shi, Kanagawa 2118588 (JP)
(74) Representative: HOFFMANN EITLE
(86) International application number: PCT/JP2005/001320
(87) International publication number: WO 2006/082613

(56) References cited:
- WO-A-01/50407
- JP-A- 6 232 782
- JP-A- 10 075 196
- JP-A- 10 293 824
- JP-A- 2000 307 466
- JP-A- 2001 111 448
- JP-A- 2001 237 638
- JP-A- 2003 506 948
- US-B1- 6 255 993
- "Electromagnetic compatibility and Radio spectrum Matters (ERM); Radio Frequency Identification Equipment operating in the band 865 MHz to 868 MHz with power levels up to 2 W; Part 1: Technical requirements and methods of measurement; ETSI EN 302 208-1" ETSI STANDARDS, LIS, SOPHIA ANTIPOLIS CEDEX, FRANCE, vol. ERM-TG34, no. V1.1.1, 1 September 2004 (2004-09-01), XP014015356 ISSN: 0000-0001

## Description

### CROSS-REFERENCE TO RELATED APPLICATIONS

This application is a continuation of international application PCT/JP2005/001320, filed on January 31, 2005.

### FIELD OF THE INVENTION

This invention relates to a radio frequency ID (RFID) system, an RFID communication control method, and to an RFID reader/writer .

### BACKGROUND ART

In recent years, systems which utilize electromagnetic coupling with tags to perform reading of ID information recorded in a tag, and RFID systems which use radio frequencies to read tag information, have been developed and used.

As an example of the latter RFID systems which use radio frequencies to perform reading, the European Telecommunications Standards Institute (ETSI) has prepared European standards (Draft ETSI EN 302 208-1V1.1.1 (2003-12)). In this Draft ETSI EN 302 208-1V1.1.1 (2003-12), use of RFID systems employing power of up to a maximum 2 W in the 865 MHz to 868 MHz frequency band has been proposed.

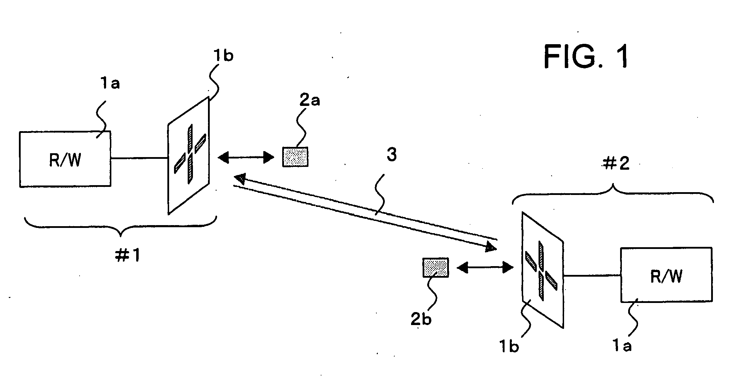

There are cases in which, in an RFID system, a plurality of reader/writers are operated in proximity. Fig. 1 is a diagram explaining an example of such a state.

In Fig. 1, signals transmitted by the respective reader/writers #1 (#2) become interference 3 with the other reader/writer #2 (#1), and so there is the problem that the reception performance of the reader/writers #1, #2 is degraded. In order to address this problem, carrier sensing is performed prior to transmission in order to reduce the effect of interference 3, and a search is performed for a frequency channel not used by the other reader/writer #2 (#1). A method is adopted in which, if an unused channel is present, the channel is used, and if not present, the device waits until an unused channel is found.

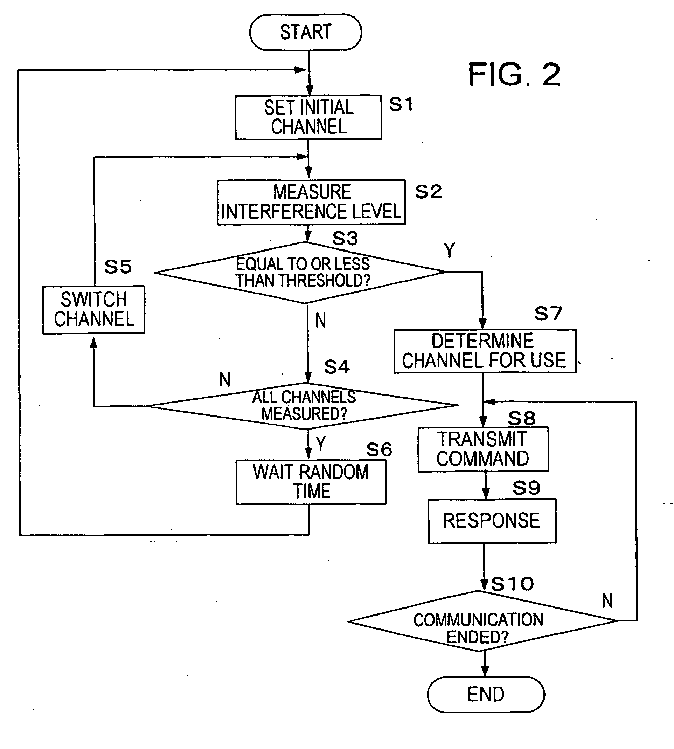

Fig. 2 explains this method employing carrier sensing, and shows the flow of an operation to read tag information in each of the reader/writers in Fig. 1.

According to the flow of Fig. 2, each of the reader/writers #1, #2 comprises a reader/writer main unit 1a and an antenna 1b.

First, an initial channel (frequency band) is set in the reader/writer main unit 1a (step S1), and the level of the carrier received by the antenna 1b in this preset initial channel is measured as an interference signal (step S2). If the interference signal level is equal to or greater than a threshold value ("N" in step S3), this channel cannot be used, and so the interference level in another channel is measured. That is, a judgment is made as to whether measurements have been performed for all channels, and if there are channels which have not been measured ("N" in step S4), reception is switched to the next channel (step S5), and processing returns to similar interference level measurements (step S2).

When measurement of all channels has already been performed ("Y" in step S4), a random wait time is set (step S6), and after the preset wait time has elapsed, processing returns to the initial channel setting (step S1), and the above processing is repeated.

In the above interference level measurement (step S2), if the interference level is equal to or less than the threshold value ("Y" in step S3), the channel for which the interference level is equal to or less than the threshold value is selected (step S7), and command signals are transmitted (step S8).

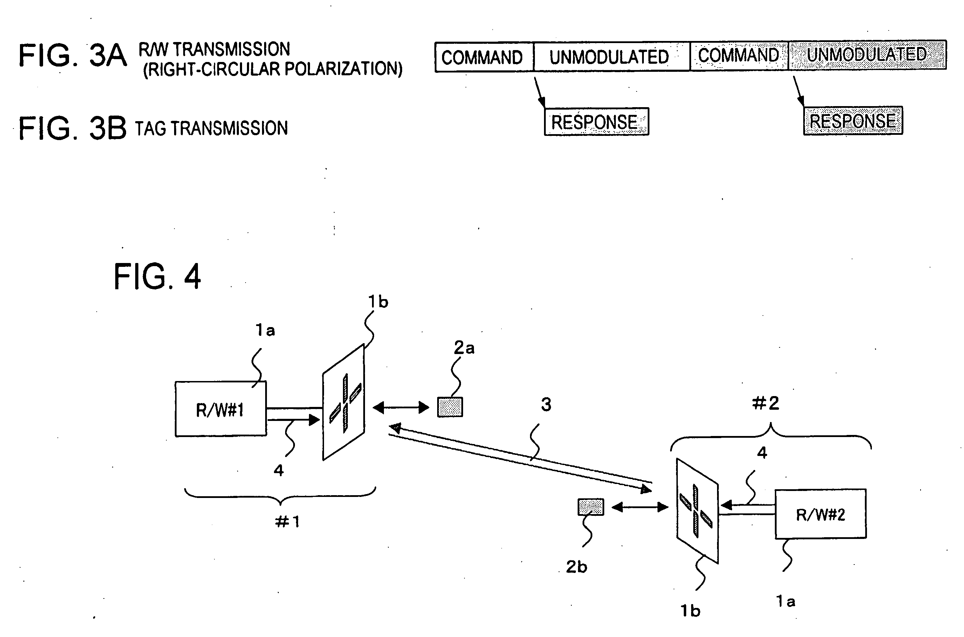

Fig. 3 explains the command signal radiated from the antenna 1b of the reader/writer #1 (#2) and the response signal from the tag 2a (2b). As shown in Fig. 3A, the reader/writers #1, #2 transmit an unmodulated continuous wave CW, and this unmodulated continuous wave CW is modulated by command signals and is transmitted from the antenna 1b with, for example, a fixed right-circular polarization.

When the tags 2a, 2b receive command signals from the corresponding reader/writers #1, #2, characteristic information comprising identification information (ID) for the article to which the tag is attached is used as tag information to modulate the unmodulated continuous wave CW in response (step S9; see Fig. 2B). Upon receiving this response signal, the reader/writers #1, #2 end communication (step S10).

As a separate method, a method may be employed in which a control device executes central control of a plurality of reader/writers #1, #2, to control the transmission timing of the respective reader/writers.

Further, in U.S. Patent No.6,255,993 B1, an invention is disclosed relating to a system to perform transmission and reception of interrogation signals and response signals between an interrogator and a transponding module. As a characteristic disclosed, when a single antenna for both transmission and reception in the same frequency band is used, or when two antennas positioned in proximity and respectively performing transmission and reception are used, there is the problem that transmission signals which are the interrogator signals return directly to the receiver antenna, and have an effect on the reception quality of received signals; in order to avoid this problem, the antenna polarization direction is made different at the time of transmission of interrogator signals and at the time of reception of response signals.

As described above, in the former method, in which with a plurality of reader/writers are operated in proximity, carrier sensing is performed to search for a frequency channel not used by another reader/writer, and when an unused channel is found the channel is used, as in the flow of Fig. 2, there is the problem that the wait time becomes long when there are numerous reader/writers. And in the latter method employing central control by a control device, there is the problem that when there are numerous reader/writers, the allocated communication time is short.

Further, in the invention disclosed in U.S. Patent No. 6,255,993B1, a case in which a plurality of reader/writers exist is not assumed, and a single frequency band (channel) is always used, and there is no description of application to a system in which searches for an unused channel among a plurality of channels are performed.

In addition to the above the standardization document ETSI EN 302 208-1 discloses an RFID system that comprises an interrogator and a tag. This interrogator measures the level of a received interference signal and teaches to monitor other sub-bands for which the level of the interference signals are equal to or less than a threshold value. Subsequently, a response signal is received from the tag in an accordingly determined channel. However, the respective teaching is not concerned with an antenna that is capable of polarization switching, changing the polarization direction between transmitting and reception and determining a polarization direction for which the level of interference signal is less than a threshold.

Further, US 6,255,993 B1 also discloses an RFID system with a reader/writer which has a reader/writer main body section and an antenna. The antenna is configured to receive first signals in a first frequency band having a first rotational polarization and to transmit second signals in the first frequency band and having a second rotational polarization so as to avoid mutual interference.

### DISCLOSURE OF THE INVENTION

Hence an object of this invention is to provide an RFID communication control method for an RFID system in which there exist a plurality of reader/writers, in which the problems of a long transmission timing wait time for the respective reader/writers, or of a short allocated communication time, are eliminated, and the effect of mutual interference occurring when a plurality of reader/writers are in proximity can be reduced.

A further object of this invention is to provide an RFID reader/writer and an RFID system which utilize this RFID communication control method.

According to a first aspect of the present invention an RFID system is provided comprising a reader/writer which has a reader/writer main unit and a polarization-switchable antenna, and which reader/writer transmits a continuous carrier wave; and a tag, which modulates the continuous carrier wave with tag information and returns a response signal to the reader/writer; wherein the reader/writer main unit measures the level of a received interference signal and determines a polarization direction for which the level of the interference signal is equal to or less than a threshold; a command signal is transmitted to the tag with a polarization direction different from the determined polarization direction; and a response signal from the tag to the command signal is received with the determined polarization direction.

According to an embodiment of the present invention the reader/writer main unit measures the level of the interference signal received in each of a plurality of channels, and determines a polarization direction for which the interference signal level is equal to or less than the threshold.

According to an embodiment of the present invention the polarization-switchable antenna comprises a plurality of antennas each having a specific polarization, a specific antenna transmitting a continuous carrier wave, wherein the reader/writer main unit measures the level of received interference signals for each of the plurality of antennas and determines an antenna with polarization at which the measured level of the interference signal is equal to or less than a threshold, wherein the command signal is transmitted from an antenna with a polarization other than the determined polarization, and wherein the response signal from the tag to the command signal is received by the antenna with the determined polarization.

According to another aspect of the present invention an RFID communication control method attains the above objects being an RFID communication control method for an RFID system, comprising a reader/writer which reader/writer has a reader/writer main unit and a polarization-switchable antenna and transmits a continuous carrier wave, and a tag which modulates the continuous carrier wave with tag information and returns the response signal to the reader/writer, the RFID communication control method comprising the steps of:
measuring an interference signal level for a specific channel sequentially for all switchable polarizations of the antenna ;
when the measured interference signal level is equal to or greater than a threshold, switching a specific channel to another channel and measuring the interference signal level;
determining a channel and polarization direction for which the measured interference signal level does not exceed the threshold ;
sending a command signal to the tag with a polarization direction other than the determined polarization direction; and
receiving a response signal to the command signal at the determined channel and polarization direction.

According to an embodiment of the present invention the the polarization-switchable antenna comprises a plurality of antennas each set to a different polarization direction and a specific antenna transmitting a continuous carrier wave, wherein the measuring of an interference signal level for a specific channel is conducted sequentially for all of the plurality of antennas, wherein the sending of the command signal to the tag is conducted with an antenna with a polarization direction other than the determined polarization direction, and wherein the receiving of the response signal to the command signal is conducted with the determined channel and the antenna with the determined polarization direction.

According to another aspect of the present invention a reader/writer is provided comprising a reader/writer main unit and a polarization-switchable antenna, which reader/writer transmits a continuous carrier wave to a tag, wherein the level of a received interference signal is measured and a channel and polarization direction of the antenna for which the level of the interference signal is equal to or less than a threshold value are determined, a command signal is sent to the tag with a polarization direction other than the determined polarization direction and the response signal to the command signal, generated by modulating the continuous carrier wave with tag information and returned from the tag, is received with the determined polarization direction and in the determined channel.

According to an embodiment of the present invention the antenna comprises a plurality of antennas each having a specific polarization wherein the reader/writer main unit measures the levels of interference signals received by each of the plurality of antennas in a plurality of channels, and determines a channel and antenna for which the measured level of the interference signal is equal to or less than a threshold, wherein the command signal is sent to the tag by an antenna other than the determined antenna, and wherein the response signal, generated by modulating the continuous carrier wave with tag information and returned from the tag, is received by the determined antenna and in the determined channel.

According to an embodiment of the present invention the antenna comprises two dipole antennas having horizontal polarization and vertical polarization respectively, wherein the reader/writer main unit further comprises a transmission/reception switch, wherein the reader/writer main unit measures the levels of interference signals received in a plurality of channels with the horizontal polarization and with the vertical polarization, and determines a channel and either horizontal or vertical polarization at which the judged level of the interference signal is equal to or less than a threshold, and wherein in accordance with a switching signal based on determination by the reader/writer main unit, the transmission/reception switch performs switching control so as to output a command signal output from the reader/writer main unit to the dipole antenna not corresponding to the determined horizontal or vertical polarization, among the two dipole antennas, and so as to input to the reader/writer main unit a response signal returned from the tag and received by the dipole antenna corresponding to the determined horizontal or vertical polarization.

Other characteristics of the invention will become clearer from the explanation of the preferred aspects of the invention which follows, referring to the drawings.

By means of this invention, the probability of detection of an unused channel can be increased, and the effect of interference between reader/writers can be reduced.

### BRIEF DESCRIPTION OF THE DRAWINGS

Fig. 1 explains an example of the state of an RFID system in which a plurality of reader/writers are operating in proximity;
Fig. 2 explains a method of unused channel detection by carrier sensing;
Fig. 3 explains command signals radiated from the antenna 1b of a reader/writer #1 (#2) and response signals from a tag 2a (2b);
Fig. 4 explains characteristics of this invention in a case of an RFID system in which a plurality of reader/writers #1, #2 are operating in proximity;
Fig. 5 is a conceptual diagram of an example of the configuration of a reader/writer to which this invention is applied;
Fig. 6 is another conceptual diagram of an example of the configuration of a reader/writer;
Fig. 7 is a conceptual block diagram of a embodiment of a tag 2a (2b);
Fig. 8 shows the flow of operation in one embodiment of the invention;
Fig. 9 explains command signals radiated the antenna 1b of a reader/writer #1 (#2) and response signals from a tag 2a (2b);
Fig. 10 shows the relation between channels Ch1 to Ch4 and polarization directions 1 to n, determined by the flow of the embodiment of Fig. 8;
Fig. 11 shows an embodiment in which a plurality of antennas, with a specific polarization direction set for each, are used;
Fig. 12 is a conceptual diagram of another example of the configuration of a reader/writer to which this invention is applied;
Fig. 13 explains control of the switches SW1 to SW4 in Fig. 12; and
Fig. 14 shows the flow of operation in another embodiment of this invention, using the reader/writer shown in Fig. 12.

### PREFFERED EMBODIMENTS OF THE INVENTION

Embodiments of the invention are explained below, referring to the drawings. The aspects explained below are intended to facilitate an understanding of the invention, but the technical scope of the invention is not limited to these aspects.

Fig. 4 shows a case of an RFID system in which a plurality of reader/writers #1, #2 are operating in proximity. In contrast with Fig. 1, as a characteristic of RFID communication control of this invention, a function 4 is provided to control the polarization direction of the reader/writer antennas 1b after carrier sensing.

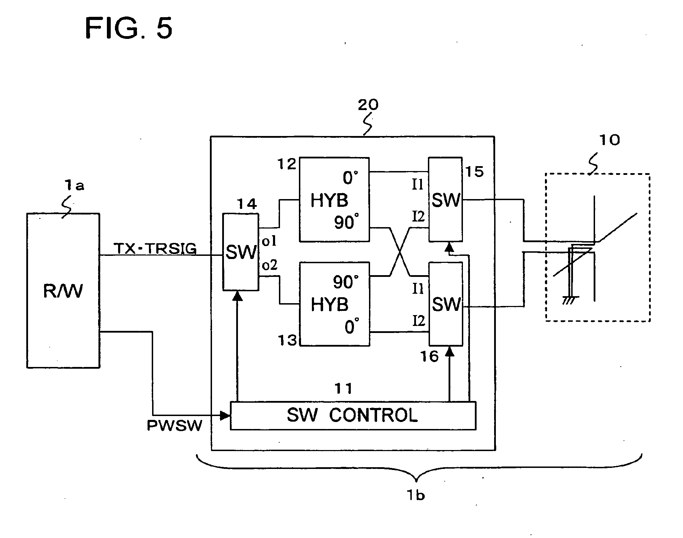

Fig. 5 is a conceptual diagram showing an example of the configuration of reader/writers #1, #2 to which this invention is applied. In Fig. 5, the antenna 1b has an antenna element 10 and a polarization direction control portion 20. The polarization direction control portion 20 has, as its characteristic, a function for controlling switching of the polarization direction of the antenna element 10 between right-circular polarization and left-circular polarization.

The antenna element 10 comprises two orthogonal dipole antennas; the horizontal-direction dipole antenna is connected to the switch 15, and the vertical-direction dipole antenna is connected to the switch 16.

The reader/writer main unit 1a sends a transmission signal TXSIG to the switch 14 of the polarization direction control portion 20, and inputs a reception signal TRSIG from the switch 14. The reader/writer main unit 1a also sends a polarization-switching signal PWSW to the switch control portion 11 of the polarization direction control portion 20.

Each of the two hybrid circuits 12, 13 inputs the transmission signal TXSIG, and outputs signals phase-shifted by 0° and 90°. The switch control portion 11 controls the switches 14, 15, 16 according to the polarization switching signal PWSW from the reader/writer main unit 1a.

That is, when a polarization switching signal PWSW specifying right-circular polarization is sent from the reader/writer main unit 1a to the switch control portion 11, the switch control portion 11 supplies switching signals to the switches 14, 15, 16 so as to activate the output terminal o1 of the switch 14 and the input terminals I1 to the switches 15, 16.

On the other hand, when a polarization switching signal PWSW specifying left-circular polarization is sent from the reader/writer #1 to the switch control portion 11, the switch control portion 11 supplies switching signals to the switches 14, 15, 16 so as to activate the output terminal o2 of the switch 14 and input terminals 12 of the switches 15, 16.

Hence when an 0° phase-shift signal is supplied from the switch 15 to the horizontal-direction dipole antenna element of the antenna element 10, and a 90° phase-shift signal is supplied from the switch 16 to the vertical-direction dipole antenna element of the antenna element 10, right-circular polarization results. On the other hand, when a 90° phase-shift signal is supplied from the switch 15 to the horizontal-direction dipole antenna element of the antenna element 10, and an 0° phase-shift signal is supplied from the switch 16 to the vertical-direction dipole antenna element of the antenna element 10, left-circular polarization results.

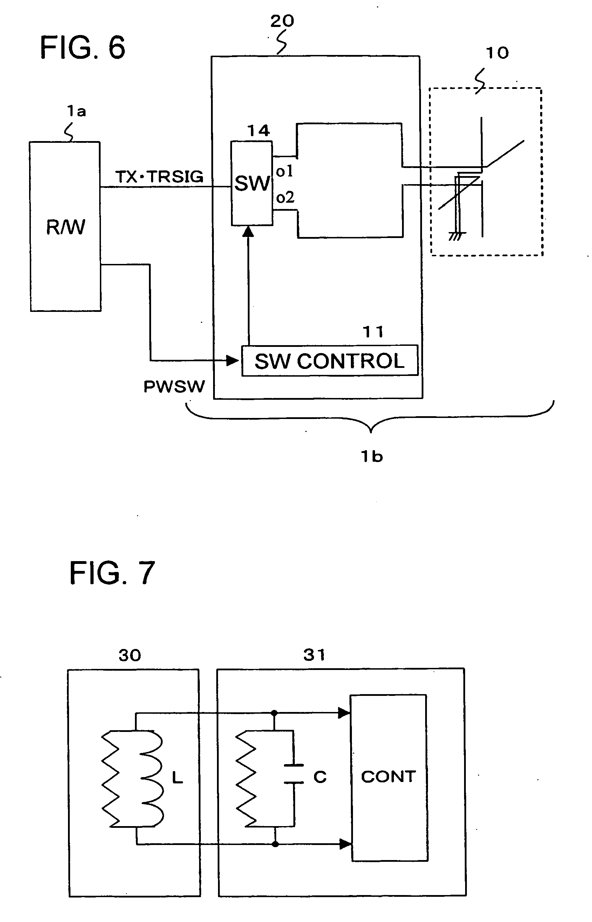

Fig. 6 is another conceptual diagram of an example of the configuration of a reader/writer, having a function to control switching the polarization direction of the antenna element 10 between horizontal polarization and vertical polarization.

In Fig. 6, similarly to the embodiment of Fig. 5, the antenna 1b has an antenna element 10 and a polarization direction control portion 20. The reader/writer main unit 1a sends a transmission signal TXSIG to the switch 14 of the polarization direction control portion 20, and inputs a received signal TRSIG from the transmission/reception switch 14. The reader/writer main unit 1a further sends horizontal and vertical polarization direction switching signals PWSW to the switch control portion 11 of the polarization direction control portion 20.

When a polarization switching signal PWSW specifying horizontal polarization is sent from the reader/writer main unit 1a to the switch control portion 11, the switch control portion 11 activates the output terminal o1 of the switch 14 and causes signals to be supplied to the horizontal dipole antenna element of the antenna element 10. On the other hand, when a polarization switching signal PWSW specifying vertical polarization is sent from the reader/writer main unit 1a to the switch control portion 11, the switch control portion 11 activates the output terminal o2 of the switch 14 and causes signals to be supplied to the vertical dipole antenna element of the antenna element 10.

Thus in the embodiment shown in Fig. 6, based on the polarization switching signal PWSW from the reader/writer main unit 1a, control can be executed to switch the polarization direction of the antenna element 10 between horizontal polarization and vertical polarization, in a configuration which is simpler than that of Fig. 5.

Fig. 7 is a conceptual block diagram of a embodiment of a tag 2a (2b), comprising an antenna portion 30 and an LSI chip 31. The antenna portion 30 comprises, as an example, a patch antenna, and has as an equivalent circuit an inductance L. The LSI chip 31 has a capacitance component C in the interface portion.

The antenna portion 30 and the interface portion of the LSI chip 31 are connected in parallel. Hence if the inductance L of the antenna portion 30 and the capacitance component C of the interface portion are in a resonance relationship, then the continuous wave CW sent from the reader/writer can be received and can be supplied, at maximum power, to the control portion CONT of the LSI chip 31.

The control portion CONT of the LSI chip 31 can use the supplied power to modulate the continuous wave CW with stored characteristic information comprising identification information for the article to which the tag is attached, and can send this wave toward the reader/writer from the antenna portion 30 with a fixed polarization direction (for example, horizontal polarization).

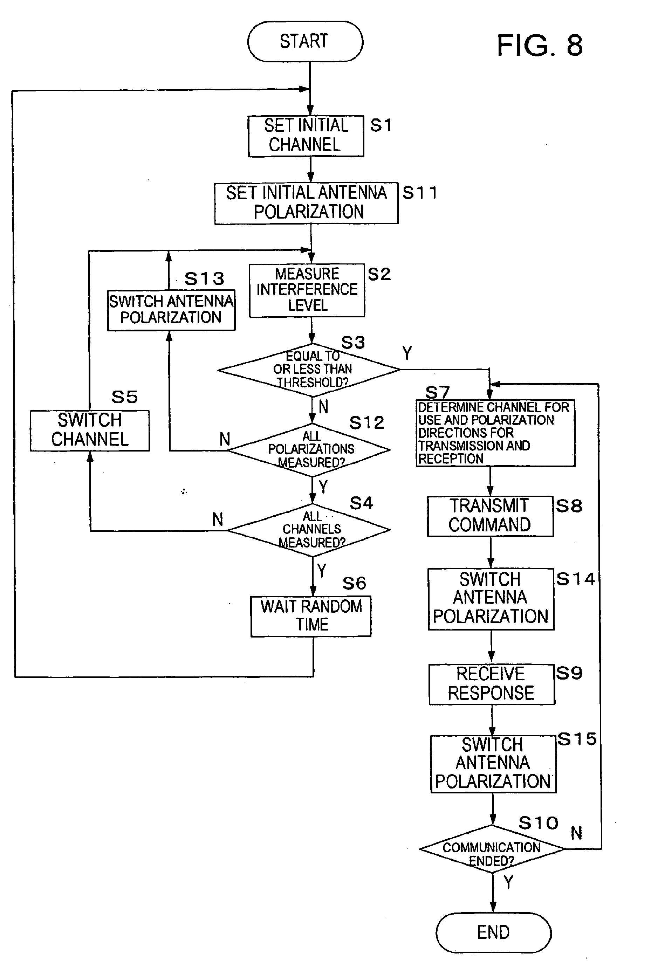

The flow of operation of one embodiment of the invention is explained referring to Fig. 8, assuming such a reader/writer and tag configuration.

In Fig. 8, first the reader/writer main unit 1a sets the initial channel (frequency band) (step S1), and sets the initial antenna polarization (step S11). If the initial antenna polarization is right-circular polarization, then as explained above, in the embodiment of Fig. 5 the switch control portion 11 activates the output terminal o1 of the switch 14 and activates the 0° phase-shift output terminal of the hybrid circuit 12 and input terminal I1 of switch 15. At the same time, the 90 deg. phase-shift output terminal of the hybrid circuit 12 and input terminal 11 of switch 16 are activated.

With these settings made, the level of the carrier received by the antenna element 10 is measured as the interference signal (step S2). If the interference signal level is equal to or greater than a threshold value ("N" in step S3), the channel cannot be used.

At this time, instead of changing the channel, a judgment that there exists a polarization direction for which measurements have not been performed (in this case, the left-circular polarization direction) (step S12), and switching of the antenna polarization to left-circular polarization is performed (step S13). Interference level measurements (step S2) and subsequent processing is again continued, for the newly switched polarization direction.

If the level of interference signals is equal to or greater than the threshold even when measurements have been performed for all polarizations ("N" in step S3), interference levels are measured for another channel. That is, a judgment is made as to whether measurements have been performed for all channels, and if there are channels for which measurements have not been performed ("N" in step S4), the channel is changed to the next channel (step S5), and interference level measurements are similarly performed (step S2).

If measurements have already been performed for all channels ("Y" in step S4), a wait time is set randomly (step S6), and after the wait time thus set has elapsed, processing again returns to the initial channel setting (step S1), and the above processing is repeated.

Further, in the above interference level measurements (step S2), if the interference level is equal to or less than the threshold ("Y" in step S3), then the channel and antenna polarization direction are judged to have an interference level at or below the threshold, and the antenna polarization direction to be used in transmission and reception is determined (step S7).

That is, as a characteristic of the invention, a polarization direction other than an antenna polarization direction determined to have an interference level equal to or less than the threshold is used for transmission of commands, and the antenna polarization direction determined to have an interference level equal to or less than the threshold is used for reception of response signals from the tag.

Hence a polarization direction other than the antenna polarization direction determined to have an interference level equal to or less than the threshold is used, so that interference occurs in command transmission, but during reception a polarization direction with a low interference level is used, so that the advantageous result of reduced interference can be obtained, even with respect to interference from reader/writers which do not perform polarization switching.

The command signal is transmitted using the polarization direction thus determined (step S8). Then, after transmitting the command, the antenna polarization is switched to the previously determined polarization direction for reception (step S14).

The response signal from the tag is received using this switched polarization direction. At this time, the polarization direction to which the antenna has been switched for reception has been judged in carrier sensing to have a low interference level, and so the response signal can be received at a satisfactory level.

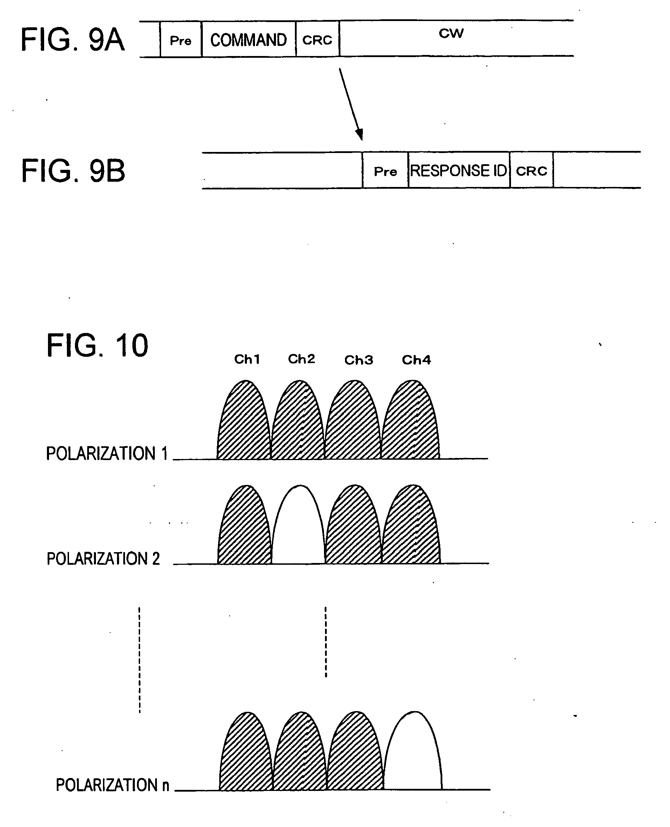

Fig. 9 explains the command signal radiated from the antenna 1b of the reader/writer #1 (#2) and the response signal from the tag 2a (2b).

As shown in Fig. 9A, the reader/writers #1 and #2 use a channel for use and antenna polarization direction determined in advance, using for example right-circular polarization to modulate a continuous wave CW with a frame signal, having a command signal and, before or after the command signal, a preamble Pre and check signal CRC, and transmits the signals.

The tags 2a and 2b receive the command signal from the corresponding reader/writer #1 or #2, and as shown in Fig. 9B, modulate the continuous wave CW with a frame signal, having as tag information characteristic information and identification information for the article to which the tag is attached, and similarly having a preamble Pre and check signal CRC before or after the tag information, and returns the signals to the corresponding reader/writer #1 or #2.

The reader/writer #1 or #2 receives this response signal as a left-circular polarized wave, having switched from the right-circular polarization used at the time of transmission of the command signal in step S14 to left-circular polarization (step S9).

Then, switching is performed to return the antenna polarization to the polarization used for transmission (step S15), and communication ends (step S10).

Fig. 10 shows the relation between channels Ch1 to Ch4 and polarization directions 1 to n, determined by the flow of the embodiment of Fig. 8. In Fig. 10, white areas represent channels (frequency bands) and polarizations which satisfy the condition that the interference signal level be equal to or less than the threshold value.

Hence in this invention, the reader/writer uses a polarization other than that of a white area in Fig. 10 (in Fig. 10, polarizations 2 and n) at the time of transmission of a command signal, and when receiving the response signal from the tag, uses the polarization 2 or the polarization n.

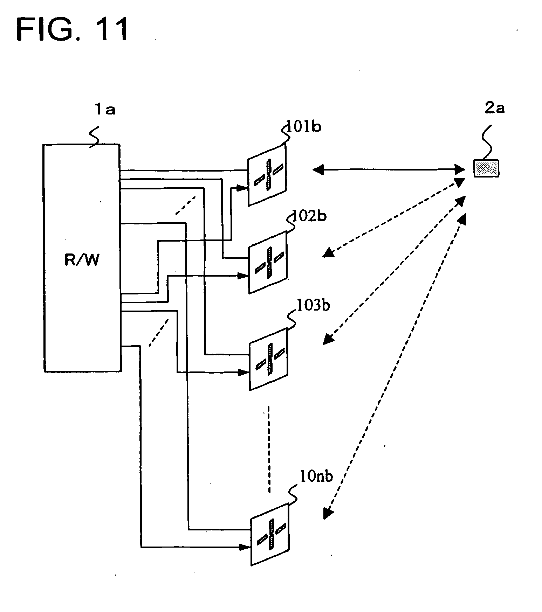

In the above explanation, a configuration was shown in which the reader/writer has one antenna 1b, and the polarization direction of the antenna is switched; but application of this invention is not limited to such a configuration. That is, as shown in Fig. 11, a configuration can also be used in which a plurality of antenna elements 101b to 10nb, each set to a specific polarization direction, are connected to the reader/writer main unit 1a, and switching control is executed so as to activate a specific antenna corresponding to the polarization to be set by the reader/writer main unit 1a.

Further, in Fig. 11 if a mode is employed in which the polarization direction can be controlled as shown in Fig. 5 or Fig. 6 for each of the plurality of antenna elements 101b to 10nb, then searches for channels enabling communication can be performed freely and easily with fewer antennas.

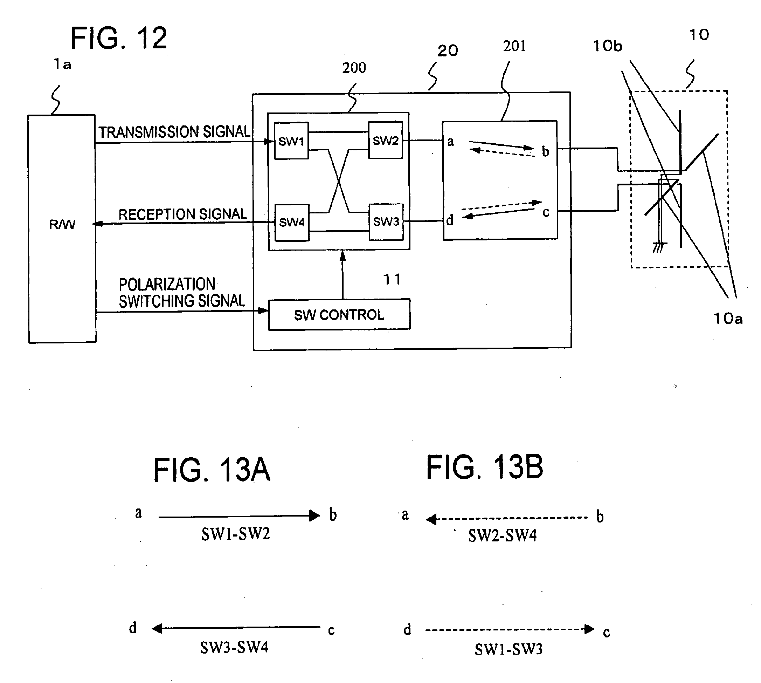

Fig. 12 is another embodiment of the invention. In this configuration, processing is performed to switch the antenna polarization each time for command transmission (step S8) and response signal reception (step S9), as shown in Fig. 8 when using the embodiment of Fig. 5 and Fig. 6.

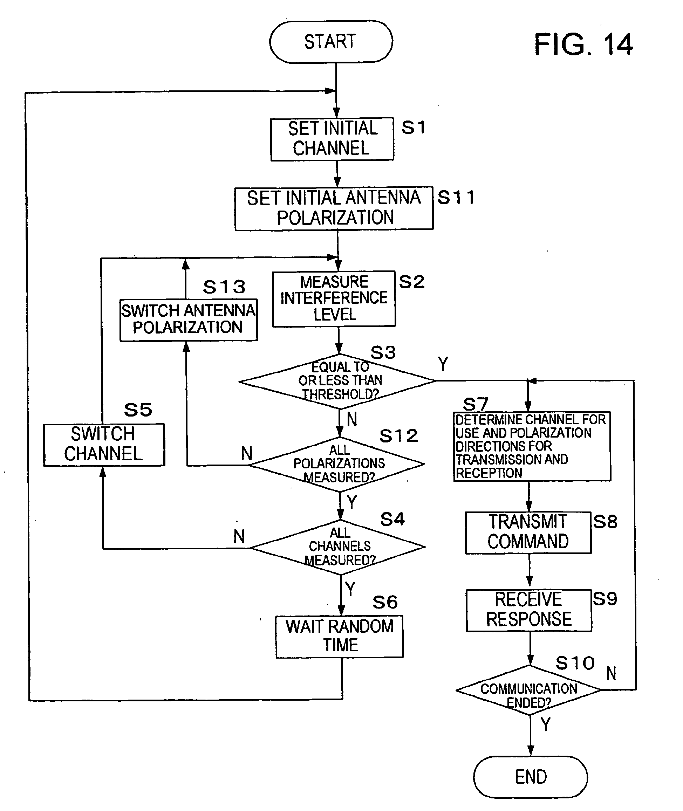

In contrast, in the embodiment of Fig. 12 antenna polarization switching is not performed at the time of command transmission or response signal reception; in this configuration, transmission/reception switching is performed solely through signal processing, as is clear from the flow of operation shown in Fig. 14 in contrast to Fig. 12.

In Fig. 12, as a characteristic, the antenna element 10 comprises horizontal and vertical dipole antennas 10a and 10b. The polarization direction control portion 20 has a switch control portion 11, a transmission/reception switching portion 200 having switches SW1 to SW4, and a bidirectional coupler 201.

The bidirectional coupler 201 has functions to pass signals in both directions between terminals a and b, and to pass signals in both directions between terminals c and d. Hence the switch control portion 11 controls the switches SW1 to SW4 of the transmission/reception switching portion 200 based on polarization switching signals from the reader/writer main unit 1a, according to the characteristics of this bidirectional coupler 201.

Control is executed as follows when command signals are transmitted with horizontal polarization using the horizontal dipole antenna 10a and response signals with vertical polarization are received using the vertical dipole antenna 10b.

Fig. 13 explains the flow of signals between terminals in the bidirectional coupler 201 and the relation of the switches SW1 to SW4. In accordance with polarization switching signals from the reader/writer main unit 1a, the switch control portion 11 controls the switches SW1 to SW4 so as to input transmission signals to the terminal a of the bidirectional coupler 201 via switches SW1 and SW2 of the transmission/reception switching portion 200, and on the other hand, to input reception signals which is input to the terminal c of the bidirectional coupler 201 and output to terminal d, to the reader/writer main unit 1a via switches SW3 and SW4 (see Fig. 13A).

When the vertical dipole antenna 10b is used to transmit command signals with vertical polarization and the horizontal dipole antenna 10a is used to receive response signals with horizontal polarization, control is executed as follows.

Switches SW1 and SW3 are controlled so that transmission signals are input via switches SW1 and SW3 to the terminal d of the bidirectional coupler 201, and so the transmission signals are output to terminal c and supplied to the vertical dipole antenna 10b. On the other hand, signals received by the horizontal dipole antenna 10a are input to terminal b of the bidirectional coupler 201 and output to terminal a. Hence switches SW2 and SW4 are controlled such that received signals pass through switches SW2 and SW4 and are input to the reader/writer main unit 1a (see Fig. 13B).

Fig. 14 shows the flow of operation corresponding to the embodiment of Fig. 12; similarly to the flow of operation shown above in Fig. 8, in step S7 the channels used and polarization directions for transmission and reception are determined. In the embodiment of Fig. 12, command transmission (step S8) and response reception (step S9) are performed without performing polarization control of the antenna element 10 when the transmission and reception polarization directions are determined. However, at this time, switches SW1 to SW4 of the transmission/reception switching portion 200 are controlled as shown in Fig. 13.

### INDUSTRIAL APPLICABILITY

As explained above, whereas in methods of the prior art searches are only performed for usable channels at a fixed polarization, in this method, by receiving response signals from the tag in a polarization direction at which the [interference signal] level detected as the search result is equal to or less than a threshold, and by performing command signal transmission in a polarization direction different from the polarization direction at which the interference signal level is equal to or less than the threshold, the effect of interference between reader/writers can be reduced. Hence the industrial contribution of this invention is substantial.

## Claims

1. A RFID system, comprising:
a reader/writer (#1), which has a reader/writer main unit (1a) and a polarization-switchable antenna (1b), and which reader/writer transmits a continuous carrier wave; and
a tag (2a), which modulates the continuous carrier wave with tag information and returns a response signal to the reader/writer (#1);
wherein the reader/writer main unit (1a) measures the level of a received interference signal and determines a polarization direction for which the level of the interference signal is equal to or less than a threshold;
a command signal is transmitted to the tag (2a) with a polarization direction different from the determined polarization direction; and
a response signal from the tag (2a) to the command signal is received with the determined polarization direction.

2. The RFID system according to claim 1, wherein the reader/writer main unit (1a) measures the level of interference signal received in each of a plurality of channels, and determines a polarization direction for which the interference signal level is equal to or less than the threshold.

3. The RFID system according to claim 1, wherein the polarization-switchable antenna comprises a plurality of antennas (101b ... 10nb) each having a specific polarization, a specific antenna transmitting a continuous carrier wave, wherein the reader/writer main unit (1a) measures the level of received interference signals for each of the plurality of antennas (101b ... 10nb) and determines an antenna with polarization at which the measured level of the interference signal is equal to or less than a threshold, wherein the command signal is transmitted from an antenna with a polarization other than the determined polarization, and wherein the response signal from the tag (2a) to the command signal is received by the antenna with the determined polarization.

4. The RFID system according to claim 3, wherein the reader/writer main unit (1a) measures the levels of interference signals received in each of a plurality of channels, and determines an antenna with polarization at which the interference signal level is equal to or less than the threshold.

5. The RFID system according to claims 2 or 4, wherein the channels are bands resulting from division into a plurality of frequency bands.

6. The RFID system according to any one of claims 1 through 5, wherein the tag (2a) comprises a patch antenna (30), and an LSI chip (31) having an interface portion connected in parallel with the patch antenna (30) and having a capacitance component (C) which resonates with an inductance component (L) of the patch antenna (30).

7. An RFID communication control method for an RFID system comprising a reader/writer (#1) which reader/writer has a reader/writer main unit (1a) and a polarization-switchable antenna (1b) and transmits a continuous carrier wave, and a tag (2a) which modulates the continuous carrier wave with tag information and returns a response signal to the reader/writer (#1),
the RFID communication control method comprising the steps of:
measuring an interference signal level for a specific channel sequentially for all switchable polarizations of the antenna (1b);
when the measured interference signal level is equal to or greater than a threshold, switching a specific channel to another channel and measuring the interference signal level;
determining a channel and polarization direction for which the measured interference signal level does not exceed the threshold ;
sending a command signal to the tag (2a) with a polarization direction other than the determined polarization direction; and
receiving a response signal to the command signal at the determined channel and polarization direction.

8. The RFID communication control method according to claim 7, wherein the polarization-switchable antenna comprises a plurality of antennas (101b ... 10nb) each set to a different polarization direction and a specific antenna transmitting a continuous carrier wave, wherein the measuring of an interference signal level for a specific channel is conducted sequentially for all of the plurality of antennas (101b ... 10nb), wherein the sending of the command signal to the tag (2a) is conducted with an antenna with a polarization direction other than the determined polarization direction, and wherein the receiving of the response signal to the command signal is conducted with the determined channel and the antenna with the determined polarization direction.

9. The RFID communication control method system according to claims 7 or 8, wherein the channels are bands resulting from division into a plurality of frequency bands.

10. The RFID communication control method according to claims 7 or 8, wherein the tag (2a) comprises a patch antenna (30), and an LSI chip (31) having an interface portion connected in parallel with the patch antenna (30) and which has a capacitance component (C) which resonates with an inductance component (L) of the patch antenna (30).

11. A reader/writer (#1), comprising a reader/writer main unit (1a) and a polarization-switchable antenna (1b),
which reader/writer transmits a continuous carrier wave a tag (2a),
wherein the level of a received interference signal is measured, and a channel and polarization direction of the antenna for which the level of the interference signal is equal to or less than a threshold are determined;
a command signal is sent to the tag (2a) with a polarization direction other than the determined polarization direction; and
a response signal to the command signal, generated by modulating the continuous carrier wave with tag information and returned from the tag (2a), is received with the determined polarization direction and in the determined channel.

12. The reader/writer (#1) according to claim 11, wherein the antenna comprises a plurality of antennas (101b ... 10nb) each having a specific polarization wherein the reader/writer main unit (1a) measures the levels of interference signals received by each of the plurality of antennas in a plurality of channels, and determines a channel and antenna for which the measured level of the interference signal is equal to or less than a threshold, wherein the command signal is sent to the tag (2a) by an antenna other than the determined antenna, and wherein the response signal, generated by modulating the continuous carrier wave with tag information and returned from the tag (2a), is received by the determined antenna and in the determined channel.

13. The reader/writer according to claim 11, wherein the antenna comprises two dipole antennas (10a, 10b) having horizontal polarization and vertical polarization respectively, wherein the reader/writer main unit (1a) further comprises a transmission/reception switch (20), wherein the reader/writer main unit measures the levels of interference signals received in a plurality of channels with the horizontal polarization and with the vertical polarization, and determines a channel and either horizontal or vertical polarization at which the judged level of the interference signal is equal to or less than a threshold, and wherein in accordance with a switching signal based on determination by the reader/writer main unit (1a), the transmission/reception switch (20) performs switching control so as to output a command signal output from the reader/writer main unit (1a) to the dipole antenna (10a, 10b) not corresponding to the determined horizontal or vertical polarization, among the two dipole antennas, and so as to input to the reader/writer main unit (1a) a response signal returned from the tag (2a) and received by the dipole antenna (10b, 10a) corresponding to the determined horizontal or vertical polarization.

## Patentansprüche

1. RFID-System, umfassend:
eine Leser/Schreiber (#1), welcher eine Leser/Schreiber-Haupteinheit (1a) und eine Polarisations-schaltbare Antenne (1b) umfasst und welcher Leser/Schreiber eine kontinuierliche Trägerwelle überträgt; und
ein Tag (2a), welches die kontinuierliche Trägerwelle mit Tag-Information moduliert und ein Antwortsignal zu dem Leser/Schreiber (#1) zurückgibt;
wobei die Leser/Schreiber-Haupteinheit (1a) das Level eines empfangenen Störsignals misst und eine Polarisationsrichtung bestimmt, für welche das Level des Störsignals gleich oder kleiner als ein Schwellwert ist;
wobei ein Befehlssignal übertragen wird zu dem Tag (2a) mit einer Polarisationsrichtung verschieden von der bestimmten Polarisationsrichtung; und
ein Antwortsignal von dem Tag (2a) auf das Befehlssignal empfangen wird mit der bestimmten Polarisationsrichtung.

2. RFID-System nach Anspruch 1, wobei die Leser/Schreiber-Haupteinheit (1a) das Level eines Störsignals misst, das in jedem von einer Vielzahl von Kanälen empfangen wird, und eine Polarisationsrichtung bestimmt, für welche das Störsignallevel kleiner oder gleich einem Schwellwert ist.

3. RFID-System nach Anspruch 1, wobei die Polarisations-schaltbare Antenne eine Vielzahl von Antennen (101b ... 10nb) umfasst, welche jede eine spezifische Polarisation aufweisen, wobei eine spezifische Antenne eine kontinuierliche Trägerwelle überträgt, wobei die Leser/Schreiber-Haupteinheit (1a) das Level von empfangenen Störsignalen für jede der Vielzahl von Antennen (101b ... 10nb) misst und eine Antenne bestimmt mit einer Polarisation, bei welcher das gemessene Level des Störsignals gleich oder kleiner als ein Schwellwert ist, wobei das Befehlssignal von einer Antenne mit einer Polarisation anders als die bestimmte Polarisation übertragen wird, und wobei das Antwortsignal von dem Tag (2a) auf das Befehlssignal durch die Antenne mit der bestimmten Polarisation empfangen wird.

4. RFID-System nach Anspruch 3, wobei die Leser/Schreiber-Haupteinheit (1a) die Level von Störsignalen misst, die in jedem einer Vielzahl von Kanälen empfangen wird, und eine Antenne bestimmt mit einer Polarisation, bei welcher das Störsignallevel gleich oder kleiner als ein Schwellwert ist.

5. RFID-System nach Anspruch 2 oder 4, wobei die Kanäle Bänder sind, die aus einem Teilen in eine Vielzahl von Frequenzbändern resultieren.

6. RFID-System nach Anspruch einem der Ansprüche 1 bis 5, wobei das Tag (2a) eine Patch-Antenne (30), und einen LIS-Chip (31) mit Schnittstellenbereich umfasst, der parallel zu der Patch-Antenne (30) verbunden ist und eine Kapazitätskomponente (C) aufweist, welche mit einer Induktanzkomponente (L) der Patch-Antenne (30) schwingt.

7. RFID-Kommunikationssteuerverfahren für ein RFID-System, umfassend Leser/Schreiber (#1), welcher Leser/Schreiber eine Leser/Schreiber-Haupteinheit (1a) und eine Polarisations-schaltbare Antenne (1b) aufweist und eine kontinuierliche Trägerwelle überträgt, und ein Tag (2a), welches die kontinuierliche Trägerwelle mit Tag-Information moduliert und ein Antwortsignal zu dem Leser/Schreiber (#1) zurückgibt,
wobei das RFID-Kommunikationssteuerverfahren die Schritte umfasst:
Messen eines Störsignallevels für einen spezifischen Kanal sequentiell für alle schaltbaren Polarisationen der Antenne (1b);
wenn das gemessene Interferenzsignallevel gleich oder größer als ein Schwellwert ist, Schalten eines spezifischen Kanals zu einem anderen Kanal und Messen des Interferenzsignallevels;
Bestimmen eines Kanals einer Polarisationsrichtung, für welches das gemessene Störsignallevel den Schwellwert nicht überschreitet;
Senden eines Befehlssignals zu dem Tag (2a) mit einer Polarisationsrichtung anders als die bestimmte Polarisationsrichtung; und
Empfangen eines Antwortsignals auf das Befehlssignal auf dem bestimmten Kanal und Polarisationsrichtung.

8. RFID-Kommunikationssteuerverfahren nach Anspruch 7, wobei die Polarisations-schaltbare Antenne eine Vielzahl von Antennen (101b ... 10nb) aufweist, welche jede auf einer unterschiedliche Polarisationsrichtung gesetzt sind und wobei eine spezifische Antenne eine kontinuierliche Trägerwelle überträgt, wobei das Messen eines Störsignallevels für einen speziellen Kanal sequentiell durchgeführt wird für alle der Vielzahl von Antennen (101b ... 10nb), wobei das Senden des Befehlssignals zu dem Tag (2a) mit einer Antenne durchgeführt wird mit einer Polarisationsrichtung anders als die bestimmte Polarisationsrichtung, und wobei das Empfangen des Antwortsignals auf das Befehlssignal mit dem bestimmten Kanal und der Antenne mit der bestimmten Polarisationsrichtung durchgeführt wird.

9. RFID-Kommunikationsssteuerverfahren nach Anspruch 7 oder 8, wobei die Kanäle Bänder sind, die aus einem Teilen in eine Vielzahl von Frequenzbändern resultieren.

10. RFID-Kommunikationsssteuerverfahren nach Anspruch 7 oder 8, wobei das Tag (2a) eine Patch-Antenne (30) umfasst und einen LIS-Chip (31) mit einem Schnittstellenbereich, der parallel zu der Patch-Antenne (30) verbunden ist und, welcher eine Kapazitätskomponente (C) aufweist, welche mit einer Induktanzkomponente (L) der Patch-Antenne (30) schwingt.

11. Leser/Schreiber (#1), umfassend eine Leser/Schreiber-Haupteinheit (1a) und eine Polarisations-schaltbare Antenne (1b), welcher Leser/Schreiber eine kontinuierliche Trägerwelle zu einem Tag (2a) überträgt,
wobei das Level eines empfangenen Störsignals gemessen wird, und ein Kanal und eine Polarisationsrichtung der Antenne bestimmt wird, für welche das Level des Störsignals gleich oder weniger als ein Schwellwert ist;
ein Befehlssignal zu einem Tag (2a) gesendet wird mit einer Polarisationsrichtung anders als die bestimmte Polarisationsrichtung; und
ein Antwortsignal auf das Befehlssignal, erzeug durch modulieren der kontinuierlichen Trägerwelle mit Tag-Information und Zurückgeben durch das Tag (2a), empfangen wird mit der bestimmten Polarisationsrichtung und in dem bestimmten Kanal.

12. Leser/Schreiber (#1) nach Anspruch 11, wobei die Antenne eine Vielzahl von Antennen (101b ... 10nb) umfasst, die jede eine spezifische Polarisation aufweisen, wobei die Leser/Schreiber-Haupteinheit (1a) die Level der Interferenzsignale misst, die durch jede der Vielzahl von Antennen in einer Vielzahl von Kanälen empfangen werden, und einen Kanal und eine Antenne bestimmt, für welche das gemessene Level des Störsignals gleich oder weniger als ein Schwellwert ist, wobei das Befehlssignal zu dem Tag (2a) durch eine Antenne anders als die bestimmte Antenne gesendet wird, und wobei das Antwortsignal, erzeugt durch Modulieren der kontinuierlichen Trägerwelle mit Tag-Information und Rückgeben durch das Tag (2a), empfangen wird durch die bestimmte Antenne und in dem bestimmten Kanal.

13. Leser/Schreiber nach Anspruch 11, wobei die Antenne zwei Dipolantennen (10a, 10b) umfasst, horizontale Polarisation beziehungsweise vertikale Polarisation aufweist, wobei die Leser/Schreiber-Haupteinheit (1a) ferner einen Übertragungs-/Empfangsschalter (20) umfasst, wobei die Leser/Schreiber-Haupteinheit die Level von Interferenzsignalen misst, die in einer Vielzahl von Kanälen mit der horizontalen Polarisation und mit der vertikalen Polarisation empfangen werden und einen Kanal entweder horizontaler oder vertikaler Polarisation bestimmt, bei welcher das beurteilte Level des Interferenzsignals gleich oder kleiner als ein Schwellwert ist und, wobei, in Übereinstimmung mit einem Schaltsignal basierend auf der Bestimmung durch die Leser/Schreiber-Haupteinheit (1a), der Übertragungs-/Empfangsschalter (20) Schaltsteuerung ausführt, um ein Befehlssignal von der Leser/Schreiber-Haupteinheit (1a) auszugeben zu der Dipolantenne (10a, 10b), die nicht der bestimmten horizontalen oder vertikalen Polarisation entspricht, unter den zwei Dipolantennen, und, um der Leser/Schreiber-Haupteinheit (1a) ein Antwortsignal, zurückgegeben von dem Tag (2a) und Empfangen durch die Dipolantenne (10b, 10a), die der bestimmten Horizontal- oder Vertikal-Polarisation entspricht, einzugeben.

## Revendications

1. Système RFID comprenant :
un dispositif de lecture/écriture (#1) comportant une unité principale de lecture/écriture (1a) et une antenne à polarisation commutable (1b), dispositif de lecture/écriture transmettant une onde porteuse continue ; et
une étiquette (2a) qui module l'onde porteuse continue avec des informations d'étiquette et retourne un signal de réponse au dispositif de lecture/écriture (#1);
dans lequel l'unité principale de lecture/écriture (1a) mesure le niveau d'un signal d'interférence reçu et détermine une direction de polarisation pour laquelle le niveau du signal d'interférence est inférieur ou égal à un seuil ;
un signal de commande est transmis à l'étiquette (2a) avec une direction de polarisation différente de la direction de polarisation déterminée ; et
un signal de réponse au signal de commande provenant de l'étiquette (2a) est reçu avec la direction de polarisation déterminée.

2. Système RFID selon la revendication 1, dans lequel l'unité principale de lecture/écriture (1a) mesure le niveau du signal d'interférence reçu dans chaque canal d'une pluralité de canaux et détermine une direction de polarisation pour laquelle le niveau du signal d'interférence est inférieur ou égal au seuil.

3. Système RFID selon la revendication 1, dans lequel l'antenne à polarisation commutable comprend une pluralité d'antennes (101b ... 10nb) ayant chacune une polarisation spécifique, une antenne spécifique transmettant une onde porteuse continue, dans lequel l'unité principale de lecture/écriture (1a) mesure le niveau des signaux d'interférence reçus pour chaque antenne de la pluralité d'antennes (101b ... 10nb) et détermine une antenne avec une polarisation à laquelle le niveau mesuré du signal d'interférence est inférieur ou égal à un seuil, dans lequel le signal de commande est transmis depuis une antenne avec une polarisation différente de la polarisation déterminée, et dans lequel le signal de réponse au signal de commande provenant de l'étiquette (2a) est reçu par l'antenne avec la polarisation déterminée.

4. Système RFID selon la revendication 3, dans lequel l'unité principale de lecture/écriture (1a) mesure les niveaux des signaux d'interférence reçus dans chaque canal d'une pluralité de canaux et détermine une antenne avec une polarisation à laquelle le niveau du signal d'interférence est inférieur ou égal au seuil.

5. Système RFID selon la revendication 2 ou 4, dans lequel les canaux sont des bandes résultant de la division en une pluralité de bandes de fréquences.

6. Système RFID selon l'une quelconque des revendications 1 à 5, dans lequel l'étiquette (2a) comprend une antenne à plaque (30), et une puce LSI (31) comportant une partie d'interface connectée en parallèle avec l'antenne à plaque (30) et ayant une composante capacitive (C) qui résonne avec une composante inductive (L) de l'antenne à plaque (30).

7. Procédé de contrôle de communication RFID pour un système RFID comprenant un dispositif de lecture/écriture (#1), dispositif de lecture/écriture comportant une unité principale de lecture/écriture (1a) et une antenne à polarisation commutable (1b) et transmettant une onde porteuse continue, et une étiquette (2a) qui module l'onde porteuse continue avec des informations d'étiquette et retourne un signal de réponse au dispositif de lecture/écriture (#1),
le procédé de contrôle de communication RFID comprenant les étapes consistant à :
mesurer le niveau d'un signal d'interférence pour un canal spécifique en séquence pour toutes les polarisations commutables de l'antenne (1b) ;
lorsque le niveau du signal d'interférence mesuré est inférieur ou égal à un seuil, commuter un canal spécifique sur un autre canal et mesurer le niveau du signal d'interférence ;
déterminer un canal et une direction de polarisation pour lesquels le niveau du signal d'interférence mesuré ne dépasse pas le seuil ;
envoyer un signal de commande à l'étiquette (2a) avec une direction de polarisation différente de la direction de polarisation déterminée ; et
recevoir dans le canal déterminé un signal de réponse au signal de commande avec la direction de polarisation déterminée.

8. Procédé de contrôle de communication RFID selon la revendication 7, dans lequel l'antenne à polarisation commutable comprend une pluralité d'antennes (101b ... 10nb) réglée chacune à une direction de polarisation différente et une antenne spécifique transmettant une onde porteuse continue, dans lequel la mesure du niveau du signal d'interférence pour un canal spécifique est effectuée en séquence pour toutes les antennes de la pluralité d'antennes (101b ... 10nb), dans lequel l'envoi du signal de commande à l'étiquette (2a) est effectué avec une antenne avec une direction de polarisation différente de la direction de polarisation déterminée, et dans lequel la réception du signal de réponse au signal de commande est effectuée avec le canal déterminé et l'antenne avec la direction de polarisation déterminée.

9. Procédé de contrôle de communication RFID selon la revendication 7 ou 8, dans lequel les canaux sont des bandes résultant d'une division en une pluralité de bandes de fréquences.

10. Procédé de contrôle de communication RFID selon la revendication 7 ou 8, dans lequel l'étiquette (2a) comprend une antenne à plaque (30), et une puce LSI (31) comportant une partie d'interface connectée en parallèle avec l'antenne à plaque (30) et ayant une composante capacitive (C) qui résonne avec une composante inductive (L) de l'antenne à plaque (30).

11. Dispositif de lecture/écriture (#1) comprenant une unité principale de lecture/écriture (1a) et une antenne à polarisation commutable (1b), dispositif de lecture/écriture transmettant une onde porteuse continue à une étiquette (2a),
dans lequel le niveau d'un signal d'interférence reçu est mesuré et un canal et une direction de polarisation de l'antenne pour lesquels le niveau du signal d'interférence est inférieur ou égal à un seuil sont déterminés ;
un signal de commande est envoyé à l'étiquette (2a) avec une direction de polarisation différente de la direction de polarisation déterminée ; et
un signal de réponse au signal de commande, généré en modulant l'onde porteuse continue avec des informations d'étiquette et retourné par l'étiquette (2a) est reçu avec la direction de polarisation déterminée et dans le canal déterminé.

12. Dispositif de lecture/écriture (#1) selon la revendication 11, dans lequel l'antenne comprend une pluralité d'antenne (101b ... 10nb) ayant chacune une polarisation spécifique dans lequel l'unité principale de lecture/écriture (1a) mesure les niveaux des signaux d'interférence reçus par chaque antenne de la pluralité d'antennes dans une pluralité de canaux, et détermine un canal et une antenne pour lesquels le niveau mesuré du signal d'interférence est inférieur ou égal à un seuil, dans lequel le signal de commande est envoyé à l'étiquette (2a) par une antenne autre que l'antenne déterminée et dans lequel le signal de réponse, généré en modulant l'onde porteuse continue avec des informations d'étiquette et retourné par l'étiquette (2a), est reçu par l'antenne déterminée et dans le canal déterminé.

13. Dispositif de lecture/écriture selon la revendication 11, dans lequel l'antenne comprend deux antennes dipôles (10a, 10b) ayant respectivement une polarisation horizontale et une polarisation verticale, dans lequel l'unité principale de lecture/écriture (1a) comprend en outre un commutateur d'émission/réception (20), dans lequel l'unité principale de lecture/écriture mesure les niveaux des signaux d'interférence reçus dans une pluralité de canaux avec la polarisation horizontale et avec la polarisation verticale, et détermine un canal et une polarisation horizontale ou verticale pour lesquels le niveau estimé du signal d'interférence est inférieur ou égal à un seuil et dans lequel, en fonction d'un signal de commutation basé sur la détermination par l'unité principale de lecture/écriture (1a), le commutateur d'émission/réception (20) effectue un contrôle de commutation de façon à délivrer en sortie un signal de commande fourni en sortie par l'unité principale de lecture/écriture (1a) vers l'antenne dipôle (10a, 10b) ne correspondant pas à la polarisation horizontale ou verticale déterminée, parmi les deux antennes dipôles et de façon à appliquer à l'entrée de l'unité principale de lecture/écriture (1a) un signal de réponse retourné par l'étiquette (2a) et reçu par l'antenne dipôle (10b, 10a) correspondant à la polarisation horizontale ou verticale déterminée.
